# EUROPÄISCHE PATENTANMELDUNG

(11) **EP 0 814 402 A2**
(43) Veröffentlichungstag der Anmeldung: **29.12.1997**
(21) Anmeldenummer: 97102863.4
(22) Anmeldetag: 21.02.1997
(51) Int. Cl.: G06F 7/00

(54) **Verfahren zum Entwurf oder zur Adaption eines Fuzzy-Reglers oder eines Systems von verknüpften Fuzzy-Reglern**

(30) Priorität: 20.06.1996 DE 19624614
(71) Anmelder: Volkswagen Aktiengesellschaft, 38436 Wolfsburg (DE)
(72) Erfinder: Timm, Klaus, Prof., 21465 Wentorf (DE); Bergholz, Ralf, Dr., 38108 Braunschweig (DE); Weisser, Hubert, Dr., 38165 Lehre (DE)

(57) **Zusammenfassung**

Es wird ein Verfahren zum Entwurf oder zur Adaption eines Fuzzy-Reglers oder eines Systems von verknüpften Fuzzy-Reglern mit mindestens zwei Eingangsgrößen (vₑ, r) und einer Ausgangsgröße (a), welcher Eingangs-Zugehörigkeitsfunktionen (A(vₑ), B(r)), mit denen Wahrheitswerte (µ(vₑ), µ(r)) linguistischer Werte für die Eingangsgrößen ermittelt werden, ein Regelwerk (R), in welchem aus den Wahrheitswerten für die Eingangsgröße Wahrheitswerte (µ(a)) für die Ausgangsgröße bestimmt werden, und Ausgangs-Zugehörigkeitsfunktionen (C(a)), mit welchen aus den Wahrheitswerten für die Ausgangsgröße die Werte der Ausgangsgröße (a) bestimmt werden, beinhaltet.

Gemäß der Erfindung werden Wertebereiche (wᵥₑ, wᵣ) für die Eingangsgrößen festgelegt und über die Wertebereiche eine Anzahl von Klassen (T1 - T4; T5, T6) bestimmt. Danach werden in einer Lernphase datensatzweise Wertekombinationen der Eingangsgrößen (vₑ, r) und der Ausgangsgröße (a) aufgenommen. In Abhängigkeit der erfaßten Wertekombinationen werden die festgelegten Klassen (T1 - T4; T5, T6) verändert, entfernt und/oder neue Klassen erzeugt. Nach Abschluß der Klassenadaption werden aufgrund der neu gebildeten Klassen (T7 - T10; T11, T12) angepaßte Zugehörigkeitsfunktionen und die Regeln des Fuzzy-Reglers erstellt.

## Beschreibung

Die Erfindung betrifft ein Verfahren zum Entwurf oder zur Adaption eines Fuzzy-Reglers oder eines Systems von verknüpften Fuzzy-Reglern mit mindestens zwei Eingangsgrößen und einer Ausgangsgröße, welcher Eingangs-Zugehörigkeitsfunktionen, mit denen Wahrheitswerte linguistischer Werte für die Eingangsgrößen ermittelt werden, ein Regelwerk, in welchen aus den Wahrheitswerten für die Eingangsgröße Wahrheitswerte für die Ausgangsgröße bestimmt werden, und Ausgangs-Zugehörigkeitsfunktionen, mit welchen aus den Wahrheitswerten für die Ausgangsgröße die Werte der Ausgangsgröße bestimmt werden, beinhaltet.

Fuzzy-Regler werden angewendet, wenn es sich darum handelt, prozeßspezifische Erfahrungsstrategien, die sich als umgangssprachliche WENN-DANN-Regeln formulieren lassen, in automatisierungstaugliche Algorithmen abzubilden. Wie aus zahlreichen Veröffentlichungen bekannt, stellen Fuzzy-Regler nichtlineare multivariable Kennfeldregler dar, deren statische Übertragungseigenschaften im wesentlichen von der Anzahl, Lage und Gestalt der Zugehörigkeitsfunktionen und der Formulierung des linguistischen Regelwerkes abhängen. Die Vielzahl der Eingangsgrößen bedingt bei der wissensbasierenden Erstellung von Fuzzy-Reglern ein nicht unbeträchtliches Quantum an Willkür. Schon aus der Zielsetzung geht hervor, daß sich die Auslegung eines Fuzzy-Reglers grundlegend von der eines herkömmlichen Reglers unterscheidet. Stehen in der konventionellen Regelungstechnik parametrische Prozeßmodelle und mathematisch gesicherte Reglerentwurfsverfahren im Vordergrund, so geht es bei Fuzzy-Reglern primär um die Operationalisierung vorhandenen Wissens.

Die übliche Vorgehensweise bei der Umsetzung vorhandenen Wissens besteht darin, daß nach der Definition der Ein- und Ausgangsgrößen des Fuzzy-Reglers eine unscharfe Partitionierung der numerischen Werte durch linguistische Werte und eine Positionierung der Zugehörigkeitsfunktionen für die Eingangs- und die Ausgangsgrößen erfolgt. Es schließt sich die Formulierung des Expertenwissens als WENN-DANN-Regeln und die Wahl einer geeigneten Defuzzifizierungsmethode an. Steht das notwendige Expertenwissen nicht zur Verfügung, müssen Verfahren des Fuzzy-Regler-Entwurfs bzw. der Adaption eingesetzt werden.

In der Veröffentlichung "Lernverfahren für Fuzzy-Regle", Automatisierungstechnische Praxis 37 (1995) 7, Seite 10 - 20, wird ein Lernverfahren für einen Fuzzy-Regler durch meßdatensatzweise Klassifikation beschrieben. Grundlage des Verfahren ist ein klassifizierender Ansatz für das Extrahieren von Fuzzy-Reglern aus Datensätzen, die jeweils aus einer Ausgangsgröße und den dazugehörigen Eingangsgrößen bestehen. Gemäß der zugrundeliegenden Idee stellen alle Datensätze Elementarregeln dar, bestimmt die Datenverteilung die Lage der Zugehörigkeitsfunktionen und definieren die Elementarregeln größter Relevanz die finale Regelbasis. Die Zugehörigkeitsfunktionen für die Ein- und Ausgangsgrößen werden bei dem bekannten Verfahren zunächst als gegeben vorausgesetzt. Alle Werte eines Beispieldatensatzes werden anhand der Zugehörigkeitsfunktionen fuzzifiziert und entsprechend ihrer Zugehörigkeitsgrade kategorisiert bzw. klassifiziert. Durch Verknüpfung der Zugehörigkeitsgrade nach der Min-Operation der Fuzzy-Logik werden Regeln unterschiedlicher Relevanz gebildet. Dabei werden alle Terme berücksichtigt, die einen Erfüllungsgrad größer 0 besitzen.

Der Nachteil dieses iterativen Verfahrens besteht insbesondere darin, daß der Speicherbedarf sehr hoch ist, da die Wertekombinationen der Ein- und Ausgangsgrößen über die gesamte Dauer der Adaption benötigt werden und die Adaption selbst sehr lange dauert.

Es ist die Aufgabe der Erfindung, ein Verfahren zum Entwurf eines neuen oder zur Adaption eines bestehenden Fuzzy-Reglers oder eines Systems von verknüpften Fuzzy-Reglern zu schaffen, bei dem nicht notwendigerweise auf bestehende Zugehörigkeitsfunktionen zurückgegriffen werden muß und das gegenüber iterativen Verfahren einen minimalen Speicheraufwand benötigt.

Die Aufgabe wird durch die Merkmale der Patentansprüche 1, 14 und 25 gelöst. Vorteilhafte Aus- und Weiterbildungen sind in den Unteransprüchen dargestellt.

Gemäß der Erfindung werden in einem ersten Schritt Wertebereiche für die gewählten Eingangsgrößen festgelegt, dabei kann bei der Adaption eines bestehenden Fuzzy-Reglers auf den von den Eingangs-Zugehörigkeitsfunktionen abgedeckten Wertebereiche zurückgegriffen werden. In einem zweiten Schritt wird über dem ermittelten Wertebereich für die Eingangsgrößen eine Anzahl von Klassen festgelegt. Diese Festlegung kann in der Lage oder der Anzahl beliebig erfolgen, sie kann sich bei der Adaption eines bestehenden Reglers jedoch auch an die Lage und/oder Anzahl der bestehenden Eingangs-Sets anlehnen. Danach werden in einer Lernphase datensatzweise Wertekombinationen der Eingangsgrößen und der Ausgangsgröße verarbeitet. Zur Verkürzung der Lernphase können die Wertekombinationen der Eingangsgrößen und der Ausgangsgröße vorselektiert werden, so daß für die Regelung nicht maßgebliche Meßdaten bei der Adaption oder dem Entwurf nicht zur Anwendung kommen. In Abhängigkeit dieser erfaßten Wertekombinationen werden in einem weiteren Schritt die im zweiten Schritt festgelegten Klassen verändert, entfernt und/oder neue Klassen erzeugt. Nach Abschluß der Klassenadaption werden die angepaßten Zugehörigkeitsfunktionen und die Regeln des Fuzzy-Reglers erstellt.

Bei der Adaption eines bereits bestehenden Fuzzy-Reglers kann bei der Festlegung der Klassen im zweiten Verfahrensschritt auf die bereits vorhandenen Eingangs-Zugehörigkeitsfunktionen der Eingangsgrößen zurückgegriffen werden. Gemäß einer vorteilhaften Ausbildung der Erfindung werden die Klassen an Stützstellen der Sets der Eingangs-Zugehörigkeitsfunktionen festgelegt, wodurch die Anzahl der festgelegten Klassen der Anzahl der Eingangs-Sets entspricht.

Mit der Festlegung der Klassen über den Wertebereich der Eingangsgrößen werden gleichzeitig Schnittstellen einer Ausgangsgröße der Klassen im Kennfeld gebildet, welche einmal die Regeln des Fuzzy-Reglers als auch die Sets der Ausgangs-Zugehörigkeitsfunktion bilden.

Des weiteren kann vorgesehen werden, daß für bestimmte Bereiche die Eingangsgröße und/oder ein Wert der Ausgangsgröße festgelegt wird, der auch bei der Adaption bzw. dem Entwurf der neuen Zugehörigkeitsfunktionen konstant bleibt.

Bei der Bildung der neuen Klassen in Abhängigkeit der erfaßten Wertekombinationen der Eingangsgrößen und der Ausgangsgröße wird vorzugsweise bei dem Auftreten einer Wertekombination, die keine bestehende Klasse trifft, eine neue Klasse gebildet. Eine weitere Ausbildung besagt, daß im Wertebereich der Eingangsgrößen um die Klassen Bereiche festgelegt werden, in denen keine neuen Klassen gebildet werden, die aufgewerteten Wertekombinationen der Eingangsgrößen und der Ausgangsgröße, die einen der Bereiche, jedoch keine der Klassen treffen, auf die benachbarten Klassen entsprechend einer Wichtung verteilt werden und die diese Klassen umgebenden Bereiche entsprechend der so erzeugten Treffer von Wertekombinationen in ihrer Breite verändert werden. Damit entstehen freie Bereiche, in welchen bei Eintreffen einer Wertekombination eine neue Klasse gebildet wird. Nach der Erzeugung einer neuen Klasse wird gemäß einer bevorzugten Ausbildung eine bestehende Klasse entfernt, so daß die Anzahl der Klassen konstant bleibt. Bei der Entscheidung, welche Klasse entfernt wird, können die unterschiedlichsten Faktoren eine Rolle spielen, beispielsweise die Trefferquote in einer Klasse durch bereits erfaßte Wertekombinationen der Eingangsgrößen und der Ausgangsgröße. Bei der Entfernung einer Klasse werden die ihm bereits zugeordneten Wertekombinationen der Eingangs- und der Ausgangsgröße (Treffer) auf die benachbarten Klassen nach einer Wichtung verteilt, vorzugsweise im Verhältnis ihres Abstandes über den Wertebereich der Eingangsgrößen zu der zu entfernenden Klasse. Gegebenenfalls werden außerdem die benachbarten Klassen entsprechend der ihnen zugeordneten Wertekombinationen der Eingangsgrößen und der Ausgangsgröße verändert.

Für die Erzeugung der neuen Sets der Eingangs-Zugehörigkeitsfunktionen aufgrund der neu gebildeten Klassen bildet jede Klasse vorzugsweise mindestens eine Stützstelle einer Eingangs-Zugehörigkeitsfunktion. Für das erfindungsgemäße Verfahren ist nicht notwendigerweise erforderlich, den gesamten Wertebereich der Eingangsgrößen durch erfaßte Wertekombinationen der Eingangsgrößen und der Ausgangsgröße abzudecken. Für solche Wertebereiche sowie Wertebereiche mit Klassen extrem herausragender Ausgangsgrößen im Schnittpunkt mit Klassen anderer Eingangsgrößen kann eine lokale und/oder globale Interpolation durchgeführt werden.

Gemäß der Erfindung werden die Wertekombinationen der Eingangsgrößen und der Ausgangsgrößen während eines Operatorbetriebes, das heißt während der Bedienung durch den Menschen, mit dem Ziel ihn zu ersetzen, insbesondere wenn keine mathematischen Modelle oder eine Sensorik mit Meßfehlern vorliegt, ermittelt.

Der Vorteil des erfindungsgemäßen Verfahrens besteht darin, daß es einen Entwurf bzw. eine Anpassung eines Fuzzy-Reglers oder eines Systems von verknüpften Fuzzy-Reglern an ein System, das starken Schwankungen der Eingangsgrößen unterliegt, ermöglicht und damit die Einsatzmöglichkeiten von Fuzzy-Reglern erweitert. Außerdem muß bei dem erfindungsgemäßen Verfahren im Gegensatz zu iterativen Verfahren während der Lernphase nicht auf bestehendes Wissen zurückgegriffen werden. Des weiteren ist es stabil gegenüber Meßfehlern und verrauschte Wertekombinationen von Eingangsgrößen und Ausgangsgröße. Besonders geeignet ist das erfindungsgemäße Verfahren für Fuzzy-Regler niedriger Dimension, beispielsweise für Fuzzy-Regler mit zwei Eingangsgrößen, wobei die Fuzzy-Regler untereinander zu einem System verknüpft sein können.

Nachfolgend wird die Erfindung anhand eines Ausführungsbeispiels näher beschrieben. Die zugehörigen Zeichnungen zeigen:
- Figur 1: ein Blockschaltbild eines Fuzzy-Reglers,
- Figur 2: einen schematischen Aufbau des Fuzzy-Reglers und
- Figur 3 - 6: eine Darstellung des erfindungsgemäßen Verfahrens zum Entwurf eines Fuzzy-Reglers.

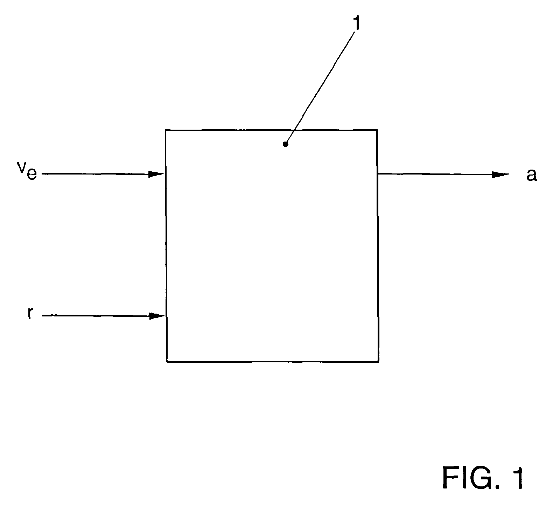

Das erfindungsgemäße Verfahren wird anhand eines Fuzzy-Reglers 1 (Figur 1) für die Einhaltung des Abstandes a zu einem vorausfahrenden Kraftfahrzeug erläutert. Dabei sollen die Eigengeschwindigkeit vₑ und der vorherrschende Reibwert r die Eingangsgrößen des Fuzzy-Reglers und der einzuhaltende Abstand a die Ausgangsgröße darstellen. Der einzuhaltende Abstand a hängt neben den physikalischen Größen Eigengeschwindigkeit vₑ und Reibwert r der Straße auch stark von der Fahrstrategie des jeweiligen Fahrzeugführers ab. Ein sportlich fahrender Fahrzeugführer wird die ihm gegebenen physikalischen Grenzen voll ausnutzen. Ein etwas defensiv fahrender Fahrzeugführer wird eher einen großzügigen Abstand a zum vorausfahrenden Kraftfahrzeug halten. Deshalb ist es für die Akzeptanz einer Abstandsregelung also von Wichtigkeit, daß der Fuzzy-Regler 1 auf den jeweiligen Fahrer des Kraftfahrzeuges eingestellt werden kann.

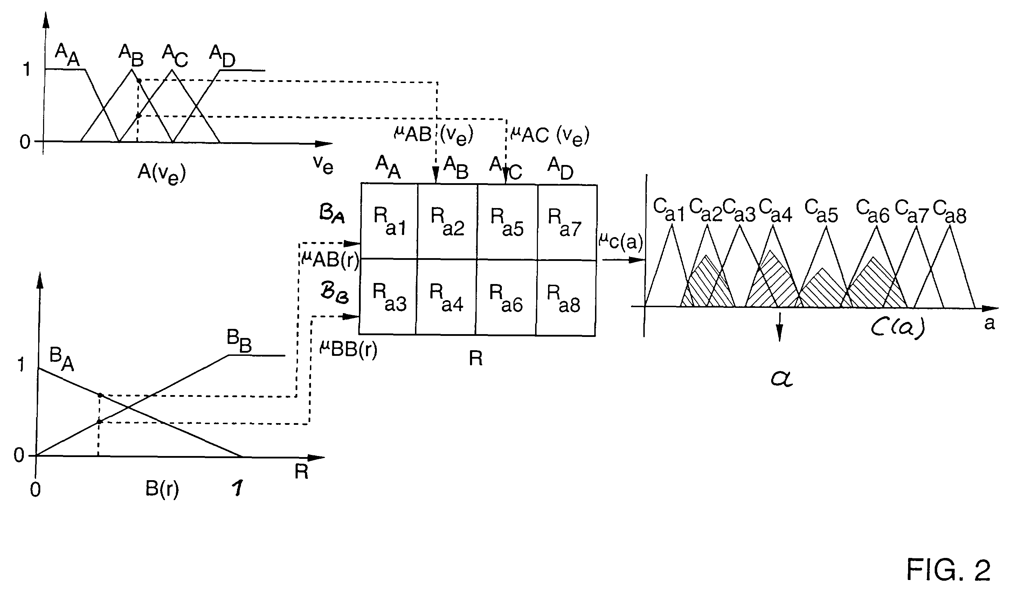

Figur 2 zeigt den Aufbau eines solchen Fuzzy-Reglers 1, der aus den Eingangs-Zugehörigkeitsfunktionen A(vₑ) und B(r), dem Regelwerk R und den Ausgangs-Zugehörigkeitsfunktionen C(a) besteht. Mittels der Eingangs-Zugehörigkeitsfunktionen A(vₑ) und B(r) werden die gemessenen Eingangsgrößen, die Eigengeschwindigkeit vₑ und der Reibwert r, fuzzifiziert, d. h. es werden Wahrheitswerte µ_{AB}(vₑ) und µ_{AC}(vₑ) sowie µ_{BA}(r) und µ_{BB}(r) gebildet. Im Regelwerk R werden die Wahrheitswerte µ_{AB}(vₑ), µ_{AC}(vₑ), µ_{BA}(r) und µ_{BB}(r) über die Regeln Rₐ₁ - Rₐ₈ verknüpft und so Wahrheitswerte µc für den Abstand a gebildet, aus denen mittels der Ausgangs-Zugehörigkeitsfunktionen C(a) Werte der Ausgangsgröße a gebildet werden.
Im Gegensatz zu einer üblichen Ausgangs-Zugehörigkeitsfunktion weist die erfindungsgemäße Ausgangs-Zugehörigkeitsfunktion C(a) eine Anzahl von Fuzzy-Sets Cₐ₁ - Cₐ₈ auf, die der Anzahl der Regeln Rₐ₁ - Rₐ₈ entsprechen kann, wobei die Breite aller Fuzzy-Sets konstant ist und ihre Stützstelle (Spitze) durch den Ausgangswert einer Regel gebildet wird. Der einzuregelnde Wert der Ausgangsgröße a wird über übliche Schwerpunktbildung ermitelt.

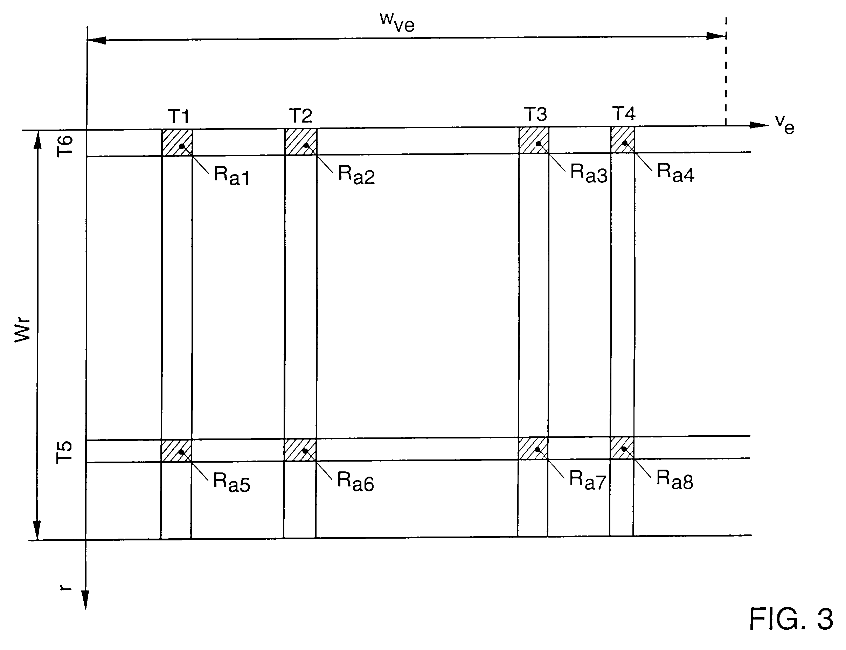

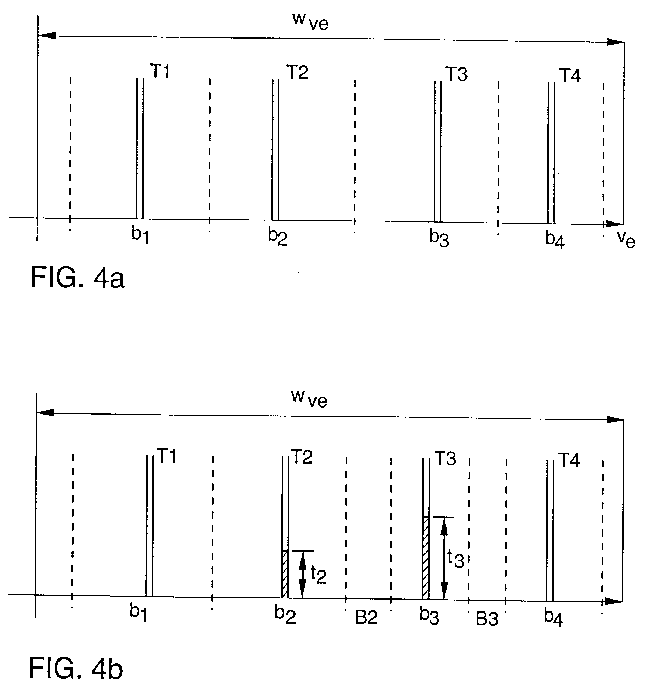

Die Figuren 3 bis 6 zeigen ein Beispiel des Entwurfes des Fuzzy-Reglers 1 anhand der Eingangsgröße Eigengeschwindigkeit vₑ und des vorherrschenden Reibwertes r. Wie in Fig. 3 gezeigt, wird nach Festlegung der Eingangsgrößen vₑ, r des Fuzzy-Reglers ihr Wertebereich wᵥₑ, wᵣ bestimmt. Bei der Eigengeschwindigkeit vₑ wird er durch den möglichen Fahrgeschwindigkeitsbereich des jeweiligen Kraftfahrzeuges bestimmt, beim Reibwert r liegt er zwischen 0 und 1. Danach werden über die Wertebereiche wᵥₑ der Eigengeschwindigkeit vₑ Klassen T1 bis T4 und über den Wertebereich wᵣ die Klassen T5 und T6 beliebig festgelegt, deren Anzahl mit der vorgesehen Anzahl von Eingangs-Zugehörigkeitsfunktionen A(vₑ), B(r) übereinstimmt (Figur 2). Dabei kann bereits Expertenwissen einfließen, indem die Klassen T1 bis T6 an Stellen mit einer entscheidenden Aussage über das zukünftige Systemverhalten gelegt werden. Die Schnittpunkte Rₐ₁ - Rₐ₈ einer bestimmten Ausgangsgröße der Klassen T1 - T4 der Eingangsgröße vₑ mit den Klassen T5, T6 der Eingangsgröße r bilden dabei erste Regeln des Fuzzy-Reglers sowie die Stützstellen der Sets der Ausgangs-Zugehörigkeitsfunktionen, die jedoch durch die beliebige Anordnung der Klassen nicht realistisch sind. Des weiteren wird für die Anfangsbereiche der Wertebereiche wᵥₑ und wᵣ ein nicht veränderlicher Wert für die Ausgangsgröße Abstand a zum vorausfahrenden Kraftfahrzeug bestimmt. Dies ist ein Wert, der während der Fahrt eines Kraftfahrzeuges nicht unterschritten wird. Während der Lern- oder Entwurfsphase des Fuzzy-Reglers, d. h. während der manuellen Fahrt des Kraftfahrzeuges durch einen Fahrzeugführer, werden Wertekombinationen der Eigengeschwindigkeit vₑ, des vorherrschenden Reibwertes r und des Abstandes a datensatzweise aufgenommen und ermittelt, ob diese Wertekombinationen eine der Klassen T1 bis T4; T5, T6 treffen. Dabei kann vor der Verwendung der eingehenden Wertekombination vₑ, r, a eine Selektierung erfolgen, so daß in bestimmten Fahrsituationen (z. B. Überholvorgang) auftretende Wertekombinationen nicht für die Adaption oder den Entwurf verwendet werden. Entsprechend der eingehenden Wertekombinationen werden die Klassen verändert, entfernt und/oder neue Klassen gebildet. Eine Möglichkeit, wie Klassen gebildet werden, ist in Fig. 4 anhand der Eingangsgröße vₑ dargestellt.

Wie auch schon in Fig. 3 gezeigt, werden in einem ersten Schritt über dem Wertebereich wᵥₑ der Eingangsgröße Klassen T1 - T4 beliebig festgelegt. Um diese Klassen werden Bereiche b₁ - b₄ gebildet, in denen beim Eintreffen von Wertekombinationen der Eingangsgrößen und der Ausgangsgröße in der Lernphase keine neuen Klassen gebildet werden dürfen. Die eintreffenden Wertekombinationen werden jedoch auf die benachbarten Klassen (bsp. T2 und T3) entsprechend einer Wichtung verteilt. Entsprechend der so erzeugten Trefferquote t₂, t₃ werden die die Klassen T2, T3 umgebende Bereiche b₂, b₃ verändert, so daß freie Bereiche B2, B3 entstehen, in denen bei Eintreffen einer Wertekombination von Eingangsgrößen und Ausgangsgrößen neue Klassen gebildet werden. Vorteilhafterweise wird bei Bildung einer neuen Klasse eine bestehende Klasse entfernt. Bei der Entscheidung, welche Klasse entfernt wird, spielt beispielsweise die Anzahl der Treffer durch die Wertekombinationen eine Rolle. Bei der Entfernung einer Klasse werden die ihr bereits zugeordneten Informationen (Trefferquote) auf die benachbarten Klassen im Verhältnis ihres Abstandes im Wertebereich wᵥₑ, wᵣ zu der entfernten Klasse verteilt und die benachbarten Klassen entsprechend der ihnen zugeordneten Informationen verändert.

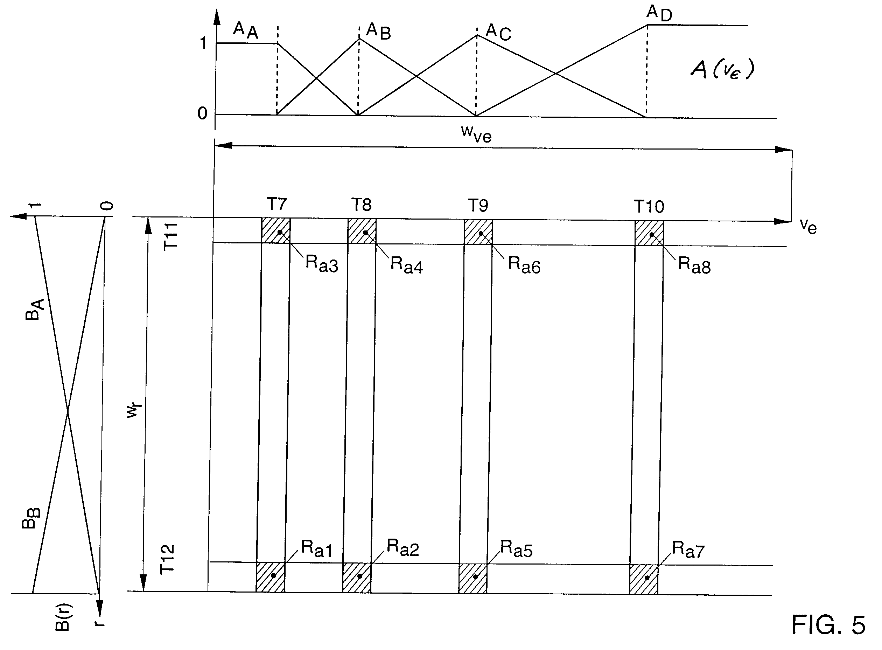

Figur 5 zeigt ein Beispiel der aufgrund der während der Lernphase erfaßten Wertekombinationen vₑ, r, a gebildeten neuen Klassen T7 - T10 über den Wertebereich der Eigengeschindigkeit vₑ und der Klassen T11, T12 über den Wertebereich des Reibwertes r. Aufgrund der neu gebildeten Klassen T7 - T10 werden die Sets A_{A} - A_{D} der Eingangs-Zugehörigkeitsfunktion A(vₑ) für die Eigengeschwindigkeits vₑ und aufgrund der Klassen T11, T12 werden die Sets B_{A}, B_{B} der Eingangs-Zugehörigkeitsfunktion B(r) für den Reibwert r gebildet, wobei jede Klasse mindestens eine Stützstelle eines Sets bildet.

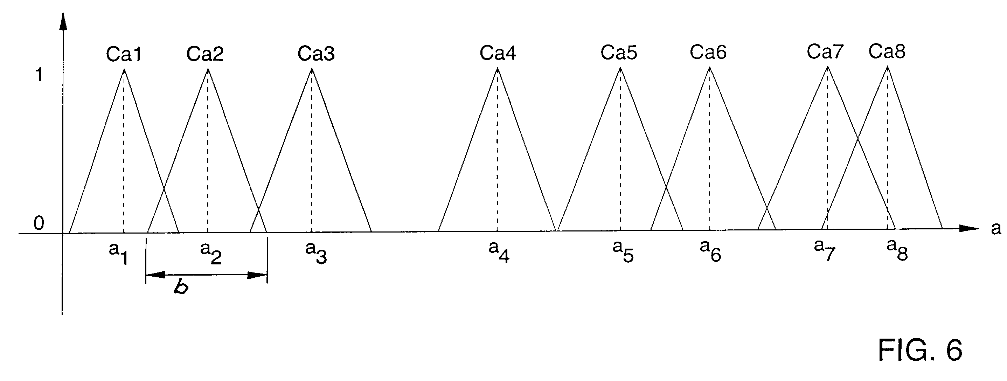

Die Schnittpunkte Rₐ₁ - Rₐ₈ einer Ausgangsgröße a₁ - a₈ der Klassen T7 - T10 mit den Klassen T11, T12 ergeben neben den Regeln des Fuzzy-Reglers gleichzeitig die Stützstellen der Sets Cₐ₁ - Cₐ₈ der Ausgangs-Zugehörigkeitsfunktion C(a) über die ihnen zugeordneten Werte a₁ - a₈ des Abstandes a, wobei auch hier die Sets grundsätzlich die gleiche Breite b aufweisen. (Fig. 6)

### BEZUGSZEICHENLISTE

- 1: Fuzzy-Regler
- a: Ausgangsgröße, Abstand
- vₑ: Eingangsgröße, Eigengeschwindigkeit
- r: Eingangsgröße, Reibwert
- A(vₑ): Eingangs-Zugehörigkeitsfunktion
- B(r): Eingangs-Zugehörigkeitsfunktion
- R: Regelwerk
- C(a): Ausgangs-Zugehörigkeitsfunktion
- µ_{AB}(vₑ): Wahrheitswert
- µ_{AC}(vₑ): Wahrheitswert
- µ_{BA}(r): Wahrheitswert
- µ_{BB}(r): Wahrheitswert
- µ_{c}(a): Wahrheitswert
- wᵥₑ, wᵣ: Wertebereich der Eingangsgröße
- T1 - T4; T5, T6: festgelegte Klassen
- T7 - T10; T11, T12: neu gebildete Klassen
- a1 - a8: Ausgangsgröße
- A_{A} - A_{D}: Sets der Eingangs-Zugehörigkeitsfunktion A(vₑ)
- B_{A}, B_{B}: Sets der Eingangs-Zugehörigkeitsfunktion B(r)
- Cₐ₁ - Cₐ₈: Sets der Ausgangs-Zugehörigkeitsfunktion C(a)
- Rₐ₁ - Rₐ₈: Schnittpunkt von Klassen, Regeln
- b₁ - b₄: Bereich
- t₂, t₃: Trefferquote
- B2, B3: freier Bereich

## Patentansprüche

1. Verfahren zur Adaption eines Fuzzy-Reglers oder eines Systems von verknüpften Fuzzy-Reglern mit mindestens zwei Eingangsgrößen und einer Ausgangsgröße, welcher Eingangs-Zugehörigkeitsfunktionen, mit denen Wahrheitswerte linguistischer Werte für die Eingangsgrößen ermittelt werden, ein Regelwerk, in welchem aus den Wahrheitswerten für die Eingangsgrößen Wahrheitswerte für die Ausgangsgröße bestimmt werden, und Ausgangs-Zugehörigkeitsfunktionen, mit welchen aus den Wahrheitswerten für die Ausgangsgröße die Werte der Ausgangsgröße bestimmt werden, aufweist dadurch gekennzeichnet, daß über den Wertebereich (wᵥₑ, wᵣ) der Eingangsgrößen (vₑ, r) eine Anzahl von Klassen (T1 - T4; T5, T6) festgelegt wird, in einer Lernphase auftretende Wertekombinationen der Eingangsgrößen (vₑ, r) und der Ausgangsgröße (a) erfaßt werden, in Abhängigkeit der erfaßten Wertekombination der Eingangsgrößen und der Ausgangsgröße die festgelegten Klassen (T1 - T4; T5, T6) verändert, entfernt und/oder neue Klassen erzeugt werden und in Abhängigkeit der aktuellen Klassen (T7 - T10; T11, T12) angepaßte Zugehörigkeitsfunktionen (A(vₑ), B(r), C(a)) und angepaßte Regeln (Rₐ₁ -Rₐ₈) des Regelwerkes (R) erzeugt werden.

2. Verfahren nach Anspruch 1, dadurch gekennzeichnet, daß die Anzahl und die Lage der Klassen (T1 - T4; T5, T6) in Abhängigkeit der bestehenden Eingangs-Zugehörigkeitsfunktionen (A(vₑ), B(r)) festgelegt wird.

3. Verfahren nach Anspruch 2, dadurch gekennzeichnet, daß die Klassen (T1 - T4; T5, T6) an Stützstellen der Eingangs-Zugehörigkeitsfunktionen (A(vₑ), B(r)) festgelegt werden.

4. Verfahren nach einem der Ansprüche 1 bis 3, dadurch gekennzeichnet, daß für einen Anfangsbereich des Wertebereiches (wᵥₑ, wᵣ) der Eingangsgrößen (ve, r) ein Wert der Ausgangsgröße (a) festgelegt wird.

5. Verfahren nach einem der Ansprüche 1 bis 4, dadurch gekennzeichnet, daß die aufgenommenen Wertekombinationen der Eingangsgrößen (vₑ, r) und der Ausgangsgröße (a) vor der Verarbeitung selektiert werden.

6. Verfahren nach einem der Ansprüche 1 bis 5, dadurch gekennzeichnet, daß eine neue Klasse erzeugt wird, wenn eine auftretende Wertekombination der Eingangsgrößen (vₑ, r) und der Ausgangsgröße (a) keine bestehende Klasse (T1 - T4; T5, T6) trifft.

7. Verfahren nach einem der Ansprüche 1 bis 6, dadurch gekennzeichnet, daß im Wertebereich (wᵥₑ, wᵣ) der Eingangsgrößen (vₑ, r) um die Klassen (T1 - T4; T5, T6) Bereiche (b₁ - b₄) festgelegt werden, in denen keine neuen Klassen gebildet werden, die aufgetretenen Wertekombinationen der Eingangsgrößen (vₑ, r) und der Ausgangsgröße (a), die einen der Bereiche (b₁ - b₄), jedoch keine der Klassen (T1 - T4) treffen, auf die benachbarten Klassen entsprechend einer Wichtung verteilt und die diese Klassen (T2, T3) umgebenden Bereiche (b₂, b₃) entsprechend der so erzeugten Treffer (t₂, t₃) von Wertekombinationen in ihrer Breite verändert werden, wodurch freie Bereiche (B2, B3) entstehen, in welchen bei Eintreffen einer Wertekombination eine neue Klasse (T7 - T10; T11, T12) gebildet wird.

8. Verfahren nach einem der Ansprüche 1 bis 7, dadurch gekennzeichnet, daß bei Erzeugung einer neuen Klasse eine bestehende Klasse (T1 - T4; T5, T6) entfernt wird, wobei die ihr bereits zugeordneten Wertekombinationen der Eingangsgrößen (vₑ, r) und der Ausgangsgröße (a) auf die benachbarten Klassen verteilt werden und diese Klassen entsprechend der ihnen zugeordneten Wertekombinationen der Eingangsgrößen (vₑ, r) und der Ausgangsgröße (a) verändert werden.

9. Verfahren nach einem der Ansprüche 1 bis 8, dadurch gekennzeichnet, daß nach der Adaption der Klassen jede Klasse (T7 - T10; T11, T12) mindestens eine Stützstelle eines Sets (A_{A} - A_{D}; B_{A}, B_{B}) der Eingangs-Zugehörigkeitsfunktion (A(vₑ), B(r)) bildet.

10. Verfahren nach einem der Ansprüche 1 bis 9, dadurch gekennzeichnet, daß durch die Schnittpunkte der Klassen (T7 - T10; T11, T12) die Regeln (Rₐ₁ - Rₐ₈) des Fuzzy-Reglers gebildet werden.

11. Verfahren nach einem der Ansprüche 1 bis 10, dadurch gekennzeichnet, daß der Ausgangswert (a₁ - a₁₄) der Schnittpunkte der Klassen (T7 - T10; T11, T12) eine Stützstelle der Sets (Cₐ₁ - Cₐ₈) der Ausgangs-Zugehörigkeitsfunktionen (C(a)) bildet.

12. Verfahren nach einem der Ansprüche 1 bis 11, dadurch gekennzeichnet, daß in Bereichen des Wertebereiches (wᵥₑ, wᵣ) der Eingangsgrößen (vₑ, r), für die keine Wertekombinationen der Eingangsgrößen (vₑ, r) und der Ausgangsgröße (a) während der Lernphase erfaßt werden und/oder Klassen mit extrem herausragenden Wertekombinationen aufweisen, eine lokale und/oder globale Interpolation durchgeführt wird.

13. Verfahren nach einem der Ansprüche 1 bis 12, dadurch gekennzeichnet, daß die Wertekombinationen der Eingangsgrößen (vₑ, r) und der Ausgangsgröße (a) während eines Operatorbetriebes gemessen werden.

14. Verfahren zum Entwurf eines Fuzzy-Reglers oder eines Systems von verknüpften Fuzzy-Reglern mit mindestens zwei Eingangsgrößen und einer Ausgangsgröße, welcher Eingangs-Zugehörigkeitsfunktionen, mit denen Wahrheitswerte linguistischer Werte für die Eingangsgrößen ermittelt werden, ein Regelwerk, in welchen aus den Wahrheitswerten für die Eingangsgrößen Wahrheitswerte für die Ausgangsgröße bestimmt werden, und Ausgangs-Zugehörigkeitsfunktionen, mit denen aus den Wahrheitswerten für die Ausgangsgröße die Werte der Ausgangsgröße bestimmt werden, aufweist, dadurch gekennzeichnet, daß Wertebereiche (wᵥₑ, wᵣ) für die Eingangsgrößen (vₑ, r) ermittelt werden, über die Wertebereiche für die Eingangsgrößen eine Anzahl von Klassen (T1 - T4; T5, T6) festgelegt wird, in einer Lernphase auftretende Wertekombinationen der Eingangsgrößen (vₑ, r) und der Ausgangsgröße (a) erfaßt werden, in Abhängigkeit der erfaßten Wertekombinationen der Eingangsgrößen (vₑ, r) und der Ausgangsgröße (a) die festgelegten Klassen (T1 - T4; T5, T6) verändert, entfernt und/oder neue Klassen angelegt werden und in Abhängigkeit der aktuellen Klassen (T7 - T10; T11, T12) Zugehörigkeitsfunktionen (A(vₑ), B(r), C(a)) und Regeln (Rₐ₁ - Rₐ₈) des Regelwerkes (R) erzeugt werden.

15. Verfahren nach Anspruch 14, dadurch gekennzeichnet, daß die aufgenommenen Wertekombinationen der Eingangsgrößen (vₑ, r) und der Ausgangsgröße (a) vor der Verarbeitung selektiert werden.

16. Verfahren nach Anspruch 14 oder 15, dadurch gekennzeichnet, daß für einen Anfangsbereich des Wertebereichs (w) ein konstanter Wert der Ausgangsgröße (a) festgelegt wird.

17. Verfahren nach einem der Ansprüche 14 bis 16, dadurch gekennzeichnet, daß eine neue Klasse erzeugt wird, wenn eine auftretende Wertekombination der Eingangsgrößen (vₑ, r) und der Ausgangsgröße (a) keine bestehende Klasse (T1 - T4; T5, T6) trifft.

18. Verfahren nach einem der Ansprüche 14 bis 17, dadurch gekennzeichnet, daß im Wertebereich (wᵥₑ, wᵣ) der Eingangsgrößen (vₑ, r) um die Klassen (T1 - T4; T5, T6) Bereiche (b₁ - b₄) festgelegt werden, in denen keine neuen Klassen gebildet werden, die aufgetretenen Wertekombinationen der Eingangsgrößen (vₑ, r) und der Ausgangsgröße (a), die einen der Bereiche (b₁ - b₄), jedoch keine der Klassen (T1 - T4) treffen, auf die benachbarten Klassen entsprechend einer Wichtung verteilt und die diese Klassen (T2, T3) umgebenden Bereiche (b₂, b₃) entsprechend der so erzeugten Treffer (t₂, t₃) von Wertekominationen in ihrer Breite verändert werden, wodurch freie Bereiche (B2, B3) entstehen, in welchen bei Eintreffen einer Wertekombination eine neue Klasse (T7 - T10; T11, 12) gebildet wird.

19. Verfahren nach einem der Ansprüche 14 bis 18, dadurch gekennzeichnet, daß bei Erzeugung einer neuen Klasse eine bestehende Klasse (T1 - T4; T5, T6) entfernt wird, wobei die ihr bereits zugeordneten Wertekombinationen der Eingangsgrößen (vₑ, r) und der Ausgangsgröße (a) auf die benachbarten Klassen verteilt werden und diese Klassen entsprechend der ihnen zugeordneten Wertekombinationen der Eingangsgrößen (vₑ, r) und Ausgangsgröße (a) verändert werden.

20. Verfahren nach einem der Ansprüche 14 bis 19, dadurch gekennzeichnet, daß jede Klasse (T7 - T10; T11, T12) mindestens eine Stützstelle eines Sets (A_{A} - A_{D}; B_{A}, B_{B}) der Eingangs-Zugehörigkeitsfunktion (A(vₑ), B(r)) bildet.

21. Verfahren nach einem der Ansprüche 14 bis 20, dadurch gekennzeichnet, daß durch die Schnittpunkte der Klassen (T7 - T10; T11, T12) die Regeln (Rₐ₁ - Rₐ₈) des Regelwerkes (R) gebildet werden.

22. Verfahren nach einem der Ansprüche 14 bis 21, dadurch gekennzeichnet, daß der Ausgangswert (a₁ - a₈) der Schnittpunkte der Klassen (T7 - T10; T11, T12) eine Stützstelle der Sets (Cₐ₁ - Cₐ₈) der Ausgangs-Zugehörigkeitsfunktion (C(a)) bildet.

23. Verfahren nach einem der Ansprüche 14 bis 22, dadurch gekennzeichnet, daß in Bereichen der Wertebereiche (wᵥₑ, wᵣ) der Eingangsgrößen (vₑ, r), für die keine Wertekombinationen der Eingangsgrößen (vₑ, r) und der Ausgangsgröße (a) während der Lernphase erfaßt werden und/oder Klassen mit extrem herausragenden Wertekombinationen aufweisen, eine lokale oder globale Interpolation durchgeführt wird.

24. Verfahren nach einem der Ansprüche 14 bis 23, dadurch gekennzeichnet, daß die Wertekombinationen der Eingangsgrößen (vₑ, r) und der Ausgangsgröße (a) während eines Operatorbetriebes erfaßt werden.

25. Fuzzy-Regler, der eine Einrichtung zur Durchführung des Verfahrens nach einem der vorhergehenden Ansprüche enthält.
